# EUROPÄISCHE PATENTSCHRIFT

(11) **EP 2 736 100 B1**
(45) Veröffentlichungstag und Bekanntmachung des Hinweises auf die Patenterteilung: **21.06.2017**
(21) Anmeldenummer: 12193807.0
(22) Anmeldetag: 22.11.2012
(51) Int. Cl.: H01M 2/34, H01M 10/48, H01M 10/42, G01J 5/02

(54) **Elektronikeinheit mit Temperaturmesseinrichtung für ein Batteriesystem**
Electronic unit with temperature measuring device for a battery system
Unité électronique avec dispositif de mesure de la température pour un système de batterie

(43) Veröffentlichungstag der Anmeldung: 28.05.2014
(73) Patentinhaber: Samsung SDI Co., Ltd., Yongin-si, Gyeonggi-do (KR)
(72) Erfinder: Erhart, Michael, 8075 Hart bei Graz (AT)
(74) Vertreter: Gulde & Partner

(56) Entgegenhaltungen:
- EP-A1- 1 667 307
- EP-A2- 0 473 514
- WO-A2-2005/114811
- DE-A1-102005 058 315
- US-B1- 6 531 847

## Beschreibung

### Gebiet der Erfindung

Die vorliegende Erfindung betrifft eine Elektronikeinheit mit Temperaturmesseinrichtung für ein Batteriesystem. Die Erfindung betrifft weiters ein Batteriesystem umfassend mehrere Batteriezellen und zumindest eine Elektronikeinheit mit Temperaturmesseinrichtung.

### Stand der Technik

Die Temperatur der Batteriezellen hat großen Einfluss auf die Leistungsbereitstellung, Betriebssicherheit und Alterung einer Batterie. Durch Erfassen der Temperatur einzelner Batteriezellen kann mit Hilfe von Kühl-/ Heizeinrichtungen einem Überschreiten oder Unterschreiten eines oberen und unteren Sollgrenzwerts der Temperatur für den Betrieb der Batteriezellen entgegen gewirkt werden.

Um zuverlässige Temperaturmesswerte zu erfassen, ist es erforderlich die Temperatur der Batteriezellen in bestimmten Zeitabständen zu messen, wobei für zuverlässige Messdaten die Temperatur der Batteriezellen immer an denselben vorbestimmten Positionen erfasst werden soll.

Als für die Temperaturüberwachung von Batteriezellen geeignete Sensorelemente können beispielsweise Dioden verwendet werden. Alternativ sind auch Transistoren einsetzbar, die als Dioden geschaltet sind. Meist sind die Sensorelemente als NTC-Widerstände oder PTC-Widerstände ausgeführt.

Bei Verwendung der oben genannten Sensortypen kommt es oft zu Problemen mit dem Wärmeübergang zwischen Batteriezellen und Sensorelementen.
Die DE 10 2005 058 315 A1 offenbart ein Messverfahren, das mit einem Infrarotsensor oder einer Wärmebildkamera die Batterie- oder Akkuoberfläche an verschiedenen voneinander beabstandeten Messpunkten lokal erfasst und ermittelt. Hierbei können mit dem Infrarotsensor verschiedene Abtastwege bzw. Scankurven relativ zur messenden Batterie- oder Akkuoberfläche abgefahren werden, oder es werden aus einer Wärmebildaufnahme einzelne Messpunkte nach einem vorgegeben Muster elektronisch ausgewählt. Je umfangreicher die Anzahl der Messpunkte und je aufwendiger die Abtastwege bzw. Messpunktmuster desto genauere Aussagen zur Temperaturverteilung und desto genauere Aussagen zum Batterie- oder Akkuzustand werden möglich.

Der Infrarotsensor kann in der DE 10 2005 058 315 A1 zum Beispiel als Wärmebildkamera ausgebildet sein, die in einem Messschritt die Temperaturverteilung über die gesamte Batterieoberfläche aufnimmt. Zur Auswertung werden dann ausgewählte Messpunkte herangezogen. Alternativ kann die Batterie oder Akkuoberfläche auch mit einem punktuell messenden Infrarotsensor gescannt werden, indem entweder der Infrarotsensor oder die Unterlage des Batteriemessplatzes motorisch angetrieben und dadurch beweglich ist, so dass mittels der Motorik verschiedene Abtastwege abgefahren werden können. Außerdem kann zusätzlich vorgesehen sein, das Messpunkt-Raster mit einem Abtastvorgang mehrfach zu durchlaufen, um statistische Messwertabweichungen einer Einzelmessung besser herausfiltern oder zumindest durch Mittelwertbildung ausgleichen zu können.

Die in der DE 10 2005 058 315 A1 beschriebenen Vorrichtungen und das offenbarte Verfahren eignen sich für Untersuchungen auf Prüfständen und in Labors. Die zuverlässige berührungslose Überwachung der Temperatur von mehreren Batteriezellen eines Batteriemoduls oder eines Batteriesystems ist aufgrund der Einbaulage und der beengten Platzverhältnisse beispielsweise in einem Kraftfahrzeug in der im Stand der Technik beschriebenen Weise nur mit großem technischem Aufwand und hohen Kosten möglich.

Aus der US 6 531 847 B1 ist das Messen der Temperatur auf einer Oberfläche eines Batteriesystems bekannt, wobei Thermoelemente mit der Oberfläche der Batterien kontaktierend verbunden sind.

Die EP 1 667 307 A1 beschreibt eine Vorrichtung zum Schutz gegen überhöhte Betriebstemperaturen von Mobiltelefonen, wobei sich die Batterie gemeinsam mit einem Kontrollsystem mechanisch gekoppelt auf einer Gehäuseplatine in Kartenform befindet und ein Infrarot-Thermosensor mit der Batterie in berührungslosem Messkontakt steht.
Es ist daher Aufgabe der Erfindung, Temperaturmesseinrichtungen der genannten Art in dieser Hinsicht zu verbessern und insbesondere eine berührungslos arbeitende Elektronikeinheit mit Temperaturmesseinrichtung anzugeben, die einfach herzustellen und dauerhaft einem Batteriemodul eines Batteriesystems zugeordnet ist, und die eine kontinuierliche und zuverlässige Messung der Temperatur von mehreren Batteriezellen eines Batteriesystems, insbesondere in einem Kraftfahrzeug während des Betriebs, ermöglicht.

Es ist außerdem Aufgabe der Erfindung, verbesserte Batteriesysteme mit erhöhter Betriebssicherheit bereitzustellen undeinen einfachen Zusammenbau sowohl der Elektronikeinheit als auch des mechanisch von der Elektronikeinheit getrennten Batteriesystems zu ermöglichen und die Montage und Justage der die Infrarot-Temperatursensoren aufweisenden Elektronikeinheit mit Temperaturmesseinrichtung auf dem mehrere Batteriezellen umfassenden Batteriemodul zu vereinfachen.

### Zusammenfassung der Erfindung

Die Lösung der Aufgabe erfolgt durch eine Elektronikeinheit mit Temperaturmesseinrichtung für ein Batteriesystem, wobei das Batteriesystem mehrere Batteriezellen und zumindest eine in einem Batteriegehäuse des Batteriesystems angeordnete Elektronikeinheit mit Temperaturmesseinrichtung umfasst, wobei auf einer Leiterplatte der Elektronikeinheit mit Temperaturmesseinrichtung und mit der Leiterplatte der Elektronikeinheit mit Temperaturmesseinrichtung wirkverbunden zumindest zwei Infrarot-Temperatursensoren angeordnet sind, wobei die Infrarot-Temperatursensoren mechanisch entkoppelt von den Batteriezellen so angeordnet und ausgerichtet sind, dass durch jeweils einen Infrarot-Temperatursensor die Temperatur jeweils eines vorbestimmten Messbereichs auf einer Oberfläche des Batteriesystems erfassbar ist, wobei ein effektives Messfeld (35) durch den Abstand zwischen den Temperatursensoren (32) und der zu überwachenden Oberfläche des Batteriesystems einstellbar ist.

Die vorbestimmten Messbereiche sind vorteilhaft so voneinander beabstandet auf der Oberfläche des Batteriesystems angeordnet, dass sie einander bevorzugt wenig oder nicht überlappen.

Der Vorteil dieser Elektronikeinheit mit Temperaturmesseinrichtung liegt darin, dass durch Verwendung einer Mehrzahl von Infrarot-Temperatursensoren die Temperatur von Teilbereichen eines Batteriesystems, insbesondere von einzelnen Batteriezellen und auch von Teilbereichen einzelner Batteriezellen gleichzeitig und kontinuierlich überwacht werden kann. Die berührungslose Messung der Oberflächentemperatur über Infrarot-Strahlung ermöglicht die mechanische Entkopplung der schweren Batteriezellen von den empfindlichen Sensorelementen. Durch die genaue und präzise Anordnung der Infrarot-Temperatursensoren beispielsweise auf einer Leiterplatte einer Elektronikeinheit mit Temperaturmesseinrichtung ist ein einfacher Zusammenbau sowohl der Elektronikeinheit als auch des Batteriesystems gegeben. Insbesondere die Montage und Justage der die Infrarot-Temperatursensoren aufweisenden Elektronikeinheit mit Temperaturmesseinrichtung auf einem mehrere Batteriezellen umfassenden Batteriemodul wird gegenüber Batterien mit herkömmlichen Temperaturmesseinrichtungen vereinfacht.

Als Batteriemodul wird eine bauliche Untereinheit eines Batteriesystems bezeichnet. Ein Batteriemodul umfasst mehrere mechanisch und elektrisch miteinander verbundene Batteriezellen und zumeist auch eine Elektronikeinheit und/oder Teile eines Temperiersystems. Ein Batteriesystem umfasst üblicherweise mehrere Batteriemodule.

Das durch die Bauweise des Infrarot-Temperatursensors vorgegebene Sichtfeld des Sensors bestimmt über die Ausrichtung des Sensors und den Abstand zum Messobjekt ein "effektives Messfeld" auf der Oberfläche des Messobjekts, also z.B. der Batteriezelle eines Batteriesystems. Bei entsprechend geringem Abstand ist dieses "effektive Messfeld" klein genug, um auch Teilbereiche einer Batteriezelle als vorbestimmte Messbereiche erfassen zu können. Die Messbereiche werden durch geeignete Positionierung und/oder Ausrichtung der Infrarot-Temperatursensoren auf oder in der Elektronikeinheit mit Temperaturmesseinrichtung vorbestimmt.

Die Lösung der Aufgabe erfolgt auch durch ein Batteriesystem umfassend mehrere Batteriezellen und zumindest eine Elektronikeinheit mit Temperaturmesseinrichtung. Die durch die Erfindung ermöglichte Erfassung von Temperaturen an ausgewählten Teilbereichen einer Mehrzahl von Batteriezellen ermöglicht eine bessere Steuerung eines Temperiersystems des Batteriesystems und dient so der Erhöhung der Sicherheit gegen Überhitzung einzelner Batteriezellen sowohl beim Laden als auch im Fahrbetrieb.

Weiterbildungen der Erfindung sind in den abhängigen Ansprüchen, der Beschreibung sowie den beigefügten Zeichnungen angegeben.

Die verwendeten Infrarot-Temperatursensoren können optische Fenster oder andere optische Komponenten, wie refraktive oder diffraktive Linsen aufweisen. Insbesondere bei angemessener räumlicher Nähe der Infrarot-Temperatursensoren zu den Messobjekten (z.B. Batteriezellen oder Zellverbinder) wird vorzugsweise auf die Verwendung zusätzlicher optischer Komponenten verzichtet.

Geeignet ist ein Abstand von weniger als 50 Millimetern zwischen Infrarot-Temperatursensoren und dem jeweils vorbestimmten Messbereich auf der Oberfläche des Batteriesystems. Vorteilhaft beträgt dieser Abstand weniger als 20 Millimeter und besonders vorteilhaft weniger als 10 Millimeter. Bei einem Abstand von weniger als 10 Millimetern kann, abhängig von der Bauweise der Infrarot-Temperatursensoren der Durchmesser des "effektiven Messfeldes" auch ohne Verwendung von zusätzlichen optischen Komponenten ein vorbestimmter Messbereich auf einer Oberfläche resultieren, der einen Durchmesser von beispielsweise weniger als ca. 10 Millimetern aufweist. Durch geeignete Auswertung einer Kombination von vorbestimmten Messbereichen können Temperaturprofile über ein Batteriemodul ermittelt werden.

Gemäß einer bevorzugten Ausführungsform sind die Infrarot-Temperatursensoren von der Leiterplatte der Elektronikeinheit mit Temperaturmesseinrichtung thermisch entkoppelt angeordnet. Thermisch entkoppelt ist in dieser Patentschrift so zu verstehen, dass Maßnahmen getroffen werden, um dem Wärmeübergang zu reduzieren. Dazu wird beispielsweise die Kupferkaschierung der Leiterplatte in der Umgebung des Infrarot-Temperatursensors weitgehend entfernt und elektrische Leitungen (Leiterbahnen) werden mit möglichst geringem Querschnitt ausgeführt. Auch eine weitgehende Freistellung des Montagebereichs des Infrarot-Temperatursensors auf der Leiterplatte durch Fräsen oder Stanzen ist förderlich. Dadurch werden rasche Temperaturschwankungen der Infrarot-Temperatursensoren, die nicht durch Wärmestrahlung der Messobjekte verursacht sind (beispielsweise durch Wärmeleitung von Wärmequellen auf der Leiterplatte der Elektronikeinheit mit Temperaturmesseinrichtung verursachte Temperaturschwankungen) vermindert oder vermieden.

Insbesondere bevorzugt ist eine Ausführungsform der erfindungsgemäßen Elektronikeinheit mit Temperaturmesseinrichtung in der die Infrarot-Temperatursensoren durch einen, zwischen den Batteriezellen und einer den Batteriezellen zugewandten Seite der Elektronikeinheit mit Temperaturmesseinrichtung angeordneten, ersten Isolator von der Oberfläche der Batteriezellen partiell thermisch entkoppelt sind.

Bevorzugt ist der erste Isolator (ein- oder mehrteilig) so ausgeführt, dass Bereiche der Leiterplatte der Elektronikeinheit mit Temperaturmesseinrichtung in der unmittelbaren Umgebung der Infrarot-Temperatursensoren gegen Wärmeeintrag geschützt werden. Die aktive Oberfläche der Infrarot-Temperatursensoren bleibt ausgespart. Dazu weist der erste Isolator beispielsweise Öffnungen auf.

Die Öffnungen im ersten Isolator sind besonders bevorzugt so ausgeführt und angeordnet, dass sie einerseits möglichst klein sind, aber andererseits das Sichtfeld und auch das "effektive Messfeld" der Infrarot-Temperatursensoren nicht beeinträchtigen. Außerdem verhindert oder vermindert der erste Isolator die Übertragung von schnellen Temperaturschwankungen aus anderen Bereichen des Batteriesystems, je nach Einbaulage insbesondere durch konvektiven Wärmetransport oder auch durch Wärmestrahlung, auf Teilbereiche der Temperaturmesseinrichtung.

In einer weiteren vorteilhaften Ausführungsform der Erfindung wird die Elektronikeinheit mit Temperaturmesseinrichtung durch einen, an der den Batteriezellen abgewandten Seite der Elektronikeinheit mit Temperaturmesseinrichtung angeordneten, zweiten Isolator von weiteren Bestandteilen des Batteriesystems thermisch entkoppelt. Insbesondere Temperaturschwankungen der Umgebung und des Batteriegehäuses sowie Einflüsse benachbarter Batteriemodule können so vermindert werden.

Der erste und zweite Isolator können auch als bauliche Einheit ausgeführt sein und so die gesamte Elektronikeinheit mit Temperaturmesseinrichtung oder Teile davon umschließen. Die oben genannten ersten und zweiten Isolatoren sind thermische Isolatoren. Geeignete Materialien und weitere Ausführungsformen der genannten Isolatoren, sowie weitere Maßnahmen zur thermischen Entkopplung der Infrarot-Temperatursensoren von ihrer unmittelbaren Umgebung sind dem Fachmann bekannt.

Besonders vorteilhaft ist eine Ausführung der erfindungsgemäßen Elektronikeinheit mit Temperaturmesseinrichtung in welcher der vorbestimmte Messbereich der Oberfläche der Batteriezelle eine Sollbruchstelle der Batteriezelle umfasst. Im Bereich der Sollbruchstelle weist die Wand der Batteriezelle eine geringere Wandstärke auf, dadurch wird im Falle einer Fehlfunktion der Batteriezelle die Oberfläche der Batteriezelle im Bereich der Sollbruchstelle schneller erwärmt und erlaubt so die frühzeitige Erkennung von Fehlern.

Bevorzugt liegt ein vorbestimmter Messbereich der Oberfläche der Batteriezelle auch nahe einem Zellpol der Batteriezelle. Bei Verwendung von gut wärmeleitfähigen Elektrodenmaterialien wird neben dem Strom auch die in der Batteriezelle entstehende Wärme an den Zellpolen gesammelt. Auch das erlaubt eine frühzeitige Erkennung von kritischen Betriebszuständen.

In einer weiteren bevorzugten Ausführungsform der Erfindung liegt der vorbestimmte Messbereich auf einem zwischen zwei Batteriezellen angeordneten Zellverbinder. Diese Anordnung erlaubt die gleichzeitige Überwachung von zwei benachbarten Zellpolen und somit Batteriezellen mit nur einem Infrarot-Temperatursensor.

Auch eine Anordnung in welcher das effektive Messfeld eines Infrarot-Temperatursensors gleichzeitig benachbarte Bereiche der Oberflächen von zwei nebeneinander angeordneten Batteriezellen erfasst ist vorteilhaft und erlaubt die gleichzeitige Überwachung von zwei Batteriezellen mit nur einem Infrarot-Temperatursensor.

In einer vorteilhaften Ausführung der Erfindung weist der vorbestimmte Messbereich auf einer Oberfläche des Batteriesystems ein Mittel zur Erhöhung des Emissionskoeffizienten auf. Sollte die Oberfläche des vorbestimmten Messbereichs selbst keine guten Emissionseigenschaften aufweisen (z.B. die glatte metallische Oberfläche der Zellverbinder) so kann die Oberfläche durch Aufbringen einer geeigneten Schicht (schwarze matte Farbe, Klebefolie, etc.) lokal geeignet verändert werden.

In einer weiteren vorteilhaften Ausführung der erfindungsgemäßen Elektronikeinheit mit Temperaturmesseinrichtung weist zumindest eine Batteriezelle im Bereich des effektiven Messfeldes (35) des Infrarot-Temperatursensors ein Fenster auf. Dadurch kann ein Temperaturanstieg im Inneren einer Batteriezelle rasch durch Messung der Infrarotstrahlung erkannt werden.

Geeignete Materialien für ein derartiges Fenster sind zum Beispiel Polypropylen und bestimmte Glastypen. Weitere geeignete Materialien sind dem Fachmann bekannt.

Besonders bevorzugt ist der Infrarot-Temperatursensor eine Strahlungs-Thermosäule oder ein Bolometer. Beide Sensortypen sind besonders gut für die Messung niedriger Temperaturen (-50 °C bis 100 °C) geeignet, können kompakt ausgeführt und einfach auf Leiterplatten verbaut werden.

Vorteilhaft ist es weiters, wenn auf der Leiterplatte der Elektronikeinheit mit Temperaturmesseinrichtung zusätzliche Temperatursensoren (Infrarot-Temperatursensoren und/oder andere Typen von Temperatursensoren) angeordnet sind. Diese können sowohl fest und unbeweglich direkt auf der Leiterplatte montiert sein oder auch über flexible Leitungen mit dieser verbunden sein. So können zusätzliche Temperaturdaten, beispielsweise als Referenzdaten, aus Bereichen des Batteriemoduls oder Batteriesystems erfasst werden, die den fest auf der Leiterplatte angeordneten Infrarot-Temperatursensoren nicht zugänglich sind.

In einer besonders bevorzugten Ausführung der Erfindung ist die Elektronikeinheit mit Temperaturmesseinrichtung eine Zellüberwachungseinheit, wobei die Zellüberwachungseinheit über Spannungsabgriffelemente die Spannung an Zellpolen und/oder Zellverbindern misst.

Die Elektronikeinheit mit Temperaturmesseinrichtung als Zellüberwachungseinheit beherbergt üblicherweise einen Mikroprozessor der zur Überwachung und meist auch zur Regelung der Zellspannungen eingerichtet ist.

In einer weiteren Ausführungsform ist die Elektronikeinheit mit Temperaturmesseinrichtung eine Verbindungsplatine, die an eine Zellüberwachungseinheit anschließbar ist. Die Verbindungsplatine beherbergt in diesem Fall nur die Infrarot-Temperatursensoren und die erforderlichen elektrischen Leitungen, die von den Kontakten der Infrarot-Temperatursensoren zu einem Anschluss für beispielsweise eine weitere Elektronikeinheit führen, die einen Mikroprozessor beherbergt.

Durch die oben genannten erfindungsgemäßen Maßnahmen und Einrichtungen wird die Betriebssicherheit eines Batteriesystems erhöht.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines Batteriemoduls mit erfindungsgemäßer Elektronikeinheit mit Temperaturmesseinrichtung von der Seite gesehen.
- Fig. 2: ist eine Darstellung einer erfindungsgemäßen Elektronikeinheit mit Temperaturmesseinrichtung entsprechend Fig. 1 von oben gesehen.
- Fig. 3: ist eine schematische Darstellung einer erfindungsgemäßen Elektronikeinheit mit Temperaturmesseinrichtung ausgeführt mit einem Infrarot-Temperatursensor pro Batteriezelle.
- Fig. 4: ist eine schematische Darstellung eines Batteriesystems eines Kraftfahrzeugs mit mehreren InfrarotTemperatursensoren und isolierter Elektronikeinheit mit Temperaturmesseinrichtung.

### Detaillierte Beschreibung der Erfindung

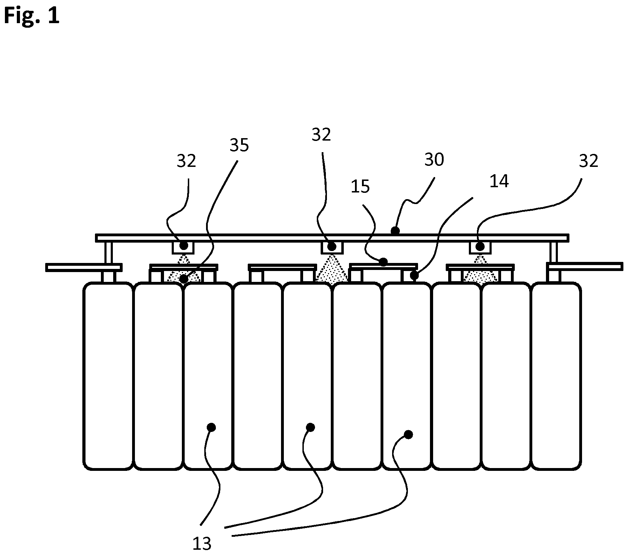

In der in Figur 1 in Seitenansicht gezeigten, beispielhaften Ausführungsform der Erfindung ist ein Batteriemodul aufweisend eine Anzahl von Batteriezellen 13 dargestellt. Die Zellpole 14 benachbarter Batteriezellen 13 sind durch Zellverbinder 15 so miteinander verbunden dass eine Serienschaltung der Batteriezellen 13 resultiert. Eine auf einer Leiterplatte aufgebaute Elektronikeinheit 30 weist eine Anzahl von Infrarot-Temperatursensoren 32 auf. Die Infrarot-Temperatursensoren 32 sind auf der Leiterplatte der Elektronikeinheit 30 so angeordnet und ausgerichtet, dass ein effektives Messfeld 35 vorbestimmte Teilbereiche der Oberfläche von Batteriezellen erfasst. In der gezeigten beispielhaften Ausführung werden vorbestimmte Teilbereiche der Oberfläche von jeweils zwei benachbarten Batteriezellen mit nur einem Infrarot-Temperatursensor erfasst und überwacht. Das effektive Messfeld 35 der Infrarot-Temperatursensoren 32 ist in der Seitenansicht schematisch als Kegel dargestellt. Der Öffnungswinkel dieses Sichtfeldes ist durch die Bauweise des Infrarot-Temperatursensors und eventuell darin enthaltene optische Einrichtungen bestimmt. Bei gegebenem Sichtfeld kann das effektive Messfeld 35 durch den Abstand zwischen Temperatursensor und der zu überwachenden Oberfläche eingestellt werden.

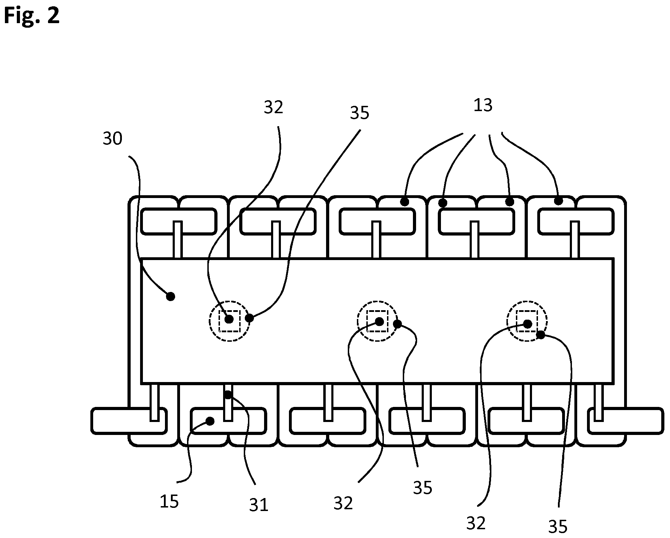

In Figur 2 sind das Batteriemodul und die erfindungsgemäße Elektronikeinheit mit Temperaturmesseinrichtung aus Fig. 1 in Draufsicht dargestellt. Die Elektronikeinheit 30 umfasst neben den drei gezeigten Infrarot-Temperatursensoren 32 auch nicht dargestellte Einrichtungen zur Messung der Spannungsniveaus von Batteriezellen 13. Die Spannungsniveaus der Batteriezellen 13 werden über Spannungsabgriffelemente 31 von den Zellverbindern 15 auf die Elektronikeinheit 30 geführt. Die effektiven Messfelder der Infrarot-Temperatursensoren 32 sind kreisförmig und als unterbrochene Linien dargestellt. Jedem Temperatursensor ist eine Signalkonditionierungseinheit zugeordnet, die das mit dem Temperatursensor aufgenommene Messsignal in eine Messspannung oder bevorzugt in ein digitales Messsignal umwandelt. Die durch die Signalkonditionierungseinheiten aufbereiteten Messsignale werden zur Auswertung einem Mikroprozessor oder Mikrocontroller zugeführt.

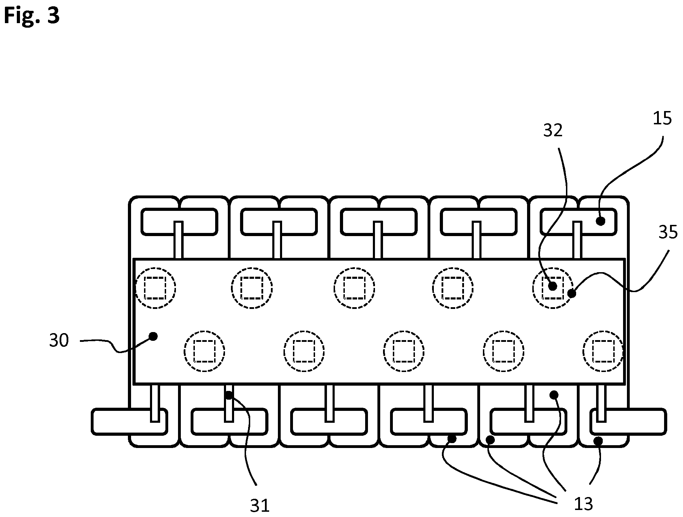

In Figur 3 ist eine weitere beispielhafte Ausführungsform einer erfindungsgemäßen Elektronikeinheit mit Temperaturmesseinrichtung dargestellt. Die gezeigte Elektronikeinheit 30 weist hierin für jede der Batteriezellen 13 einen gesonderten ihr zugeordneten Infrarot-Temperatursensor 32 auf.

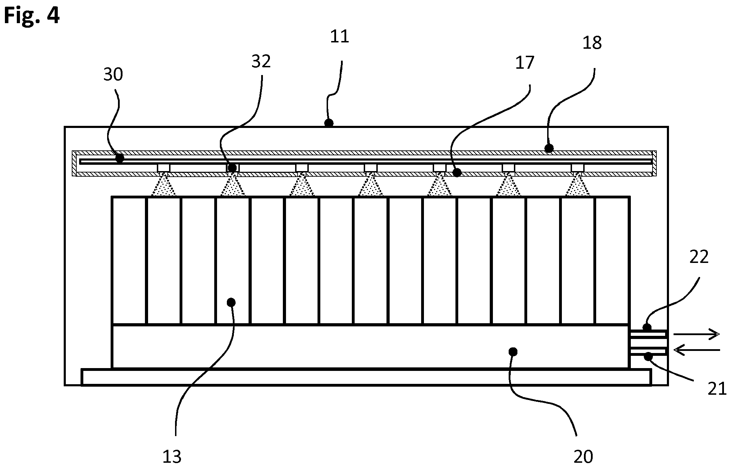

Figur 4 zeigt beispielhaft ein Batteriesystem in einem Batteriegehäuse 11 mit einer Anordnung zur Temperierung der Batteriezellen 13. Einem Temperiersystem 20 wird über eine Zulauföffnung 21 Temperiermittel zugeführt und über eine Auslassöffnung 22 in einen externen Kreislauf zur Abkühlung/Aufheizung rückgeführt. Dadurch werden die Batteriezellen 13 sowohl vor Überhitzung, als auch vor Unterkühlung geschützt.

Das Temperiersystem 20 erzeugt entsprechend den Messdaten der (Infrarot-)Temperatursensoren einen optimalen Temperaturbereich zum Betreiben der Batteriezellen 13.

Die Elektronikeinheit 30 samt Infrarot-Temperatursensoren 32 wird durch einen ersten Isolator 17 und einen zweiten Isolator 18 gegen thermische Einflüsse aus anderen Bereichen des Batteriesystems geschützt. Der erste Isolator 17 weist im Bereich der Infrarot-Temperatursensoren 32 kleine Öffnungen auf, die so ausgebildet sind, dass sie das Sichtfeld und somit das effektive Messfeld 35 der Infrarot-Temperatursensoren 32 nicht beeinträchtigen.

Mikroprozessoren oder Mikrocontroller sind in den schematischen Darstellungen der Figuren 1 bis 4 nicht dargestellt. Sie können direkt auf den Elektronikeinheiten 30 angeordnet sein, oder auch über analoge und/oder digitale Leitungen, insbesondere serielle Bussysteme mit übergeordneten elektronischen Einrichtungen, beispielsweise einer Batterieüberwachungseinheit (BMU) verbunden sein.

### Bezugszeichenliste

- 11: Batteriegehäuse
- 13: Batteriezelle
- 14: Zellpole
- 15: Zellverbinder
- 17: erster (thermischer) Isolator
- 18: zweiter (thermischer) Isolator
- 20: Temperiersystem
- 21: Zulauföffnung
- 22: Auslassöffnung
- 30: Elektronikeinheit mit Temperaturmesseinrichtung
- 31: Spannungsabgriffelement
- 32: Infrarot-Temperatursensor
- 35: effektives Messfeld / Sichtfeld

## Patentansprüche

1. Elektronikeinheit mit Temperaturmesseinrichtung (30) für ein Batteriesystem, wobei das Batteriesystem mehrere Batteriezellen (13) und zumindest eine in einem Batteriegehäuse (11) des Batteriesystems angeordnete Elektronikeinheit mit Temperaturmesseinrichtung (30) umfasst,
**dadurch gekennzeichnet, dass**
auf einer Leiterplatte der Elektronikeinheit mit Temperaturmesseinrichtung (30) und mit der Leiterplatte der Elektronikeinheit mit Temperaturmesseinrichtung (30) wirkverbunden zumindest zwei Infrarot-Temperatursensoren (32) angeordnet sind, wobei die Infrarot-Temperatursensoren (32) mechanisch entkoppelt von den Batteriezellen (13) so angeordnet und ausgerichtet sind, dass durch jeweils einen Infrarot-Temperatursensor (32) die Temperatur jeweils eines vorbestimmten Messbereichs auf einer Oberfläche des Batteriesystems erfassbar ist, wobei ein effektives Messfeld (35) durch den Abstand zwischen den Temperatursensoren (32) und der zu überwachenden Oberfläche des Batteriesystems einstellbar ist.

2. Elektronikeinheit mit Temperaturmesseinrichtung nach Anspruch 1,
**dadurch gekennzeichnet, dass**
die Infrarot-Temperatursensoren (32) von der Leiterplatte der Elektronikeinheit mit Temperaturmesseinrichtung (30) thermisch entkoppelt angeordnet sind.

3. Elektronikeinheit mit Temperaturmesseinrichtung (30) nach Anspruch 1 oder 2,
**dadurch gekennzeichnet, dass**
die Infrarot-Temperatursensoren (32) durch einen, zwischen den Batteriezellen (13) und einer den Batteriezellen zugewandten Seite der Elektronikeinheit (30) angeordneten, ersten Isolator (17) von der Oberfläche der Batteriezellen (13) partiell thermisch entkoppelt sind.

4. Elektronikeinheit mit Temperaturmesseinrichtung (30) nach Anspruch 3,
**dadurch gekennzeichnet, dass**
der erste Isolator (17) im Bereich der Infrarot-Temperatursensoren Öffnungen aufweist.

5. Elektronikeinheit mit Temperaturmesseinrichtung (30) nach einem der vorhergehenden Ansprüche,
**dadurch gekennzeichnet, dass**
die Elektronikeinheit (30) durch einen, an der den Batteriezellen abgewandten Seite der Elektronikeinheit (30) angeordneten, zweiten Isolator (18) von weiteren Bestandteilen des Batteriesystems thermisch entkoppelt ist.

6. Elektronikeinheit mit Temperaturmesseinrichtung (30) nach einem der vorhergehenden Ansprüche,
**dadurch gekennzeichnet, dass**
der vorbestimmte Messbereich der Oberfläche der Batteriezelle (13) eine Sollbruchstelle der Batteriezelle umfasst.

7. Elektronikeinheit mit Temperaturmesseinrichtung (30) nach einem der vorhergehenden Ansprüche,
**dadurch gekennzeichnet, dass**
der vorbestimmte Messbereich der Oberfläche der Batteriezelle (13) nahe einem Zellpol der Batteriezelle liegt.

8. Elektronikeinheit mit Temperaturmesseinrichtung (30) nach einem der vorhergehenden Ansprüche,
**dadurch gekennzeichnet, dass**
der vorbestimmte Messbereich auf einem zwischen zwei Batteriezellen angeordneten Zellverbinder liegt.

9. Elektronikeinheit mit Temperaturmesseinrichtung (30) nach einem der vorhergehenden Ansprüche,
**dadurch gekennzeichnet, dass**
das effektive Messfeld (35) eines Infrarot-Temperatursensors (32) gleichzeitig zwei nebeneinander angeordnete Batteriezellen (13) erfasst.

10. Elektronikeinheit mit Temperaturmesseinrichtung (30) nach einem der vorhergehenden Ansprüche,
**dadurch gekennzeichnet, dass**
der vorbestimmte Messbereich auf einer Oberfläche des Batteriesystems ein Mittel zur Erhöhung des Emissionskoeffizienten aufweist.

11. Elektronikeinheit mit Temperaturmesseinrichtung (30) nach einem der vorhergehenden Ansprüche,
**dadurch gekennzeichnet, dass**
zumindest eine Batteriezelle im Bereich des effektiven Messfeldes (35) des Infrarot-Temperatursensors (32) ein Fenster aufweist.

12. Elektronikeinheit mit Temperaturmesseinrichtung (30) nach einem der vorhergehenden Ansprüche,
**dadurch gekennzeichnet, dass**
der Infrarot-Temperatursensor eine Strahlungs-Thermosäule oder ein Bolometer ist.

13. Elektronikeinheit mit Temperaturmesseinrichtung (30) nach einem der vorhergehenden Ansprüche,
**dadurch gekennzeichnet, dass**
auf der Leiterplatte der Elektronikeinheit (30) zusätzliche Temperatursensoren angeordnet sind.

14. Elektronikeinheit mit Temperaturmesseinrichtung (30) nach einem der vorhergehenden Ansprüche,
**dadurch gekennzeichnet, dass**
die Elektronikeinheit mit Temperaturmesseinrichtung (30) eine Zellüberwachungseinheit ist, wobei die Zellüberwachungseinheit über Spannungsabgriffelemente (31) auch die Spannung an Zellpolen und/oder Zellverbindern misst.

15. Batteriesystem umfassend mehrere Batteriezellen (13) und zumindest eine Elektronikeinheit mit Temperaturmesseinrichtung (30) entsprechend einem der vorhergehenden Ansprüche.

## Claims

1. Electronic unit with temperature measuring device (30) for a battery system, the battery system comprising a plurality of battery cells (13) and at least one electronic unit with temperature measuring device (30), which electronic unit is arranged in a battery housing (11) of the battery system, **characterised in that**
at least two infrared temperature sensors (32) are arranged on a circuit board of the electronic unit with temperature measuring device (30) and operatively connected to the circuit board of the electronic unit with temperature measuring device (30), the infrared temperature sensors (32) being arranged and aligned mechanically decoupled from the battery cells (13) in such a manner that the temperature in each case of a predetermined measurement region on a surface of the battery system can be sensed by way in each case of an infrared temperature sensor (32), an effective measurement field (35) being adjustable by virtue of the distance between the temperature sensors (32) and the surface of the battery system to be monitored.

2. Electronic unit with temperature measuring device according to claim 1,
**characterised in that**
the infrared temperature sensors (32) are arranged thermally decoupled from the circuit board of the electronic unit with temperature measuring device (30).

3. Electronic unit with temperature measuring device (30) according to claim 1 or 2,
**characterised in that**
the infrared temperature sensors (32) are partially thermally decoupled from the surface of the battery cells (13) by a first insulator (17) arranged between the battery cells (13) and a side of the electronic unit (30), which side faces the battery cells.

4. Electronic unit with temperature measuring device (30) according to claim 3,
**characterised in that**
the first insulator (17) comprises apertures in the region of the infrared temperature sensors.

5. Electronic unit with temperature measuring device (30) according to one of the preceding claims,
**characterised in that**
the electronic unit (30) is thermally decoupled from other components of the battery system by a second insulator (18) arranged on the side of the electronic unit (30), which side is remote from the battery cells.

6. Electronic unit with temperature measuring device (30) according to one of the preceding claims,
**characterised in that**
the predetermined measurement region of the surface of the battery cell (13) comprises a predetermined breaking point of the battery cell.

7. Electronic unit with temperature measuring device (30) according to one of the preceding claims,
**characterised in that**
the predetermined measurement region of the surface of the battery cell (13) lies in proximity of a cell pole of the battery cell.

8. Electronic unit with temperature measuring device (30) according to one of the preceding claims,
**characterised in that**
the predetermined measurement region lies on a cell connector arranged between two battery cells.

9. Electronic unit with temperature measuring device (30) according to one of the preceding claims,
**characterised in that**
the effective measurement field (35) of an infrared temperature sensor (32) simultaneously senses two adjacent battery cells (13).

10. Electronic unit with temperature measuring device (30) according to one of the preceding claims,
**characterised in that**
the predetermined measurement region on a surface of the battery system includes a means for increasing the coefficient of emission.

11. Electronic unit with temperature measuring device (30) according to one of the preceding claims,
**characterised in that**
at least one battery cell comprises a window in the region of the effective measurement field (35) of the infrared temperature sensor (32).

12. Electronic unit with temperature measuring device (30) according to one of the preceding claims,
**characterised in that**
the infrared temperature sensor is a radiation thermopile or a bolometer.

13. Electronic unit with temperature measuring device (30) according to one of the preceding claims,
**characterised in that**
additional temperature sensors are arranged on the circuit board of the electronic unit (30).

14. Electronic unit with temperature measuring device (30) according to one of the preceding claims,
**characterised in that**
the electronic unit with temperature measuring device (30) is a cell monitoring unit, the cell monitoring unit also measuring the voltage at cell poles and/or cell connectors by way of voltage tapping elements (31).

15. Battery system comprising a plurality of battery cells (13) and at least one electronic unit with temperature measuring device (30) according to one of the preceding claims.

## Revendications

1. Unité électronique à dispositif de mesure de température (30) pour un système de batterie, le système de batterie comprenant plusieurs éléments de batterie (13) et au moins une unité électronique à dispositif de mesure de température (30) disposée dans un boîtier (11) du système de batterie,
**caractérisée en ce que** :
au moins deux capteurs de température à infrarouge (32) sont disposés sur une carte de circuits imprimés de l'unité électronique à dispositif de mesure de température (30) et connectés à la carte de circuits imprimés de l'unité électronique à dispositif de mesure de température (30), les capteurs de température à infrarouge (32) étant disposés et alignés en étant mécaniquement désaccouplés des éléments de batterie (13) de manière à permettre la détection par chaque capteur de température à infrarouge (32) de la température d'une zone de mesure définie respective sur une surface du système de batterie, un champ de mesure (35) effectif étant réglable par espacement entre les capteurs de température (32) et la surface du système de batterie à surveiller.

2. Unité électronique à dispositif de mesure de température selon la revendication 1, **caractérisée en ce que** les capteurs de température à infrarouge (32) sont disposés en étant thermiquement désaccouplés de la carte de circuits imprimés de l'unité électronique à dispositif de mesure de température (30).

3. Unité électronique à dispositif de mesure de température (30) selon la revendication 1 ou 2, **caractérisée en ce que** les capteurs de température à infrarouge (32) sont en partie thermiquement désaccouplés de la surface des éléments de batterie (13) par un premier isolant (17) disposé entre les éléments de batterie (13) et une face de l'unité électronique (30) opposée aux éléments de batterie.

4. Unité électronique à dispositif de mesure de température (30) selon la revendication 3, **caractérisée en ce que** le premier isolant (17) présente des ouvertures au niveau des capteurs de température à infrarouge.

5. Unité électronique à dispositif de mesure de température (30) selon l'une des revendications précédentes, l'unité électronique (30) étant **caractérisée en ce qu'**elle est thermiquement désaccouplée d'autres composants du système de batterie par un deuxième isolant (18) disposé sur la face de l'unité électronique (30) distante des éléments de batterie.

6. Unité électronique à dispositif de mesure de température (30) selon l'une des revendications précédentes, **caractérisée en ce que** la zone de mesure définie de la surface de l'élément de batterie (13) comprend un point de cassure imposé de l'élément de batterie.

7. Unité électronique à dispositif de mesure de température (30) selon l'une des revendications précédentes, **caractérisée en ce que** la zone de mesure définie de la surface de l'élément de batterie (13) est située à proximité d'un pôle de l'élément de batterie.

8. Unité électronique à dispositif de mesure de température (30) selon l'une des revendications précédentes, **caractérisée en ce que** la zone de mesure définie est située sur un connecteur d'élément disposé entre deux éléments de batterie.

9. Unité électronique à dispositif de mesure de température (30) selon l'une des revendications précédentes, **caractérisée en ce que** le champ de mesure (35) effectif d'un capteur de température à infrarouge (32) détecte simultanément deux éléments de batterie (13) situées côte à côte.

10. Unité électronique à dispositif de mesure de température (30) selon l'une des revendications précédentes, **caractérisée en ce que** la zone de mesure définie présente un moyen d'élévation des coefficients d'émission sur une surface du système de batterie.

11. Unité électronique à dispositif de mesure de température (30) selon l'une des revendications précédentes, **caractérisée en ce qu'**au moins un élément de batterie présente une fenêtre au niveau du champ de mesure (35) effectif du capteur de température à infrarouge (32).

12. Unité électronique à dispositif de mesure de température (30) selon l'une des revendications précédentes, **caractérisée en ce que** le capteur de température à infrarouge est une thermopile à rayonnement ou un bolomètre.

13. Unité électronique à dispositif de mesure de température (30) selon l'une des revendications précédentes, **caractérisée en ce que** des capteurs de température additionnels sont disposés sur la carte de circuits imprimés de l'unité électronique (30).

14. Unité électronique à dispositif de mesure de température (30) selon l'une des revendications précédentes, l'unité électronique à dispositif de mesure de température (30) étant **caractérisée en ce qu'**elle est une unité de surveillance d'élément, l'unité de surveillance d'élément mesurant également la tension sur des pôles d'élément et/ou des connecteurs d'élément au moyen d'éléments de prélèvement de tension (31).

15. Système de batterie comprenant plusieurs éléments de batterie (13) et au moins une unité électronique à dispositif de mesure de température (30) selon l'une des revendications précédentes.
